# EUROPEAN PATENT SPECIFICATION

(11) **EP 2 347 891 B1**
(45) Date of publication and mention of the grant of the patent: **10.10.2012**
(21) Application number: 10196780.0
(22) Date of filing: 23.12.2010
(51) Int. Cl.: B29D 11/00, G03B 35/00, B41M 5/382, G02B 3/00

(54) **Printing sheet and method for producing the same**
Druckblech und Verfahren zu deren Herstellung
Feuille d'impression et son procédé de production

(30) Priority: 25.01.2010 JP 2010013338; 25.01.2010 JP 2010013339
(43) Date of publication of application: 27.07.2011
(60) Divisional application: 12172539.4
(73) Proprietor: Fujifilm Corporation, Minato-ku Tokyo 106-8620 (JP)
(72) Inventor: Shimizu, Takashi, Saitama 331-9624 (JP); Katsumoto, Ryuichi, Saitama 331-9624 (JP); Ogawa, Shotaro, Saitama 331-9624 (JP); Hibino, Ryo, Saitama 331-9624 (JP)
(74) Representative: HOFFMANN EITLE

(56) References cited:
- US-B1- 6 373 636

## Description

### Field of the Invention

The presently disclosed subject matter relates to a printing sheet and a method for producing the same, and particularly to a printing sheet provided with a lens on one surface thereof and a method for producing the same.

### Description of the Related Art

Conventionally, there has been known a printing sheet of a transfer system provided with an image-absorbing layer on the back side of a plastic sheet having a lens part, as a recording sheet which records a stereoscopic image and a three-dimensional display image in which the contents of a picture displayed change depending on a viewing direction.

For example, Japanese Patent Application Laid-Open No. 06-282019 discloses a thermal transfer recording sheet for stereoscopic photographs including a lenticular lens sheet as a substrate and a ink absorbing layer which is coated and dried on the back side of the lenticular lens sheet.

### SUMMARY OF THE INVENTION

However, the thermal transfer recording sheet for stereoscopic photographs of Japanese Patent Application Laid-Open No. 06-282019 does not have cushioning properties because the absorbing layer is directly formed on the lenticular lens sheet. Therefore, a printing head contacts the absorbing layer formed on the hard lens sheet through the transfer sheet. As a result, since the printing head causes partial contact due to the unevenness of the lens sheet surface or the like, there has been a problem of easily generating failures such as color omission and density unevenness.

Further, in the method of Japanese Patent Application Laid-Open No. 06-282019, there has been a problem of the deformation of lens shape to dull the lens by being exposed to high temperatures in a coating and drying step of the absorbing layer because the absorbing layer is formed after the lens layer is formed.

In order to solve the problem, a highly heat-resistant resin has to be selected as a resin for the lens layer, which greatly restricts the selection of materials. Further, since the resin has to be melted at a higher temperature, the energy efficiency during the production will also be reduced.

With respect to cushioning properties, Japanese Patent No. 3004575 discloses an image-receiving sheet for thermal transfer recording having a cushioning layer which is formed by bonding a film between base paper and a ink absorbing layer. However, in order to bond the film used as a sheet cushioning layer to the base paper, the image receiving sheet for thermal transfer recording of Japanese Patent No. 3004575 further requires an adhesive layer.

Japanese Patent No. 283511 discloses a thermal transfer image-receiving sheet having a substrate sheet, a cushioning layer formed on the surface of the substrate sheet, and a ink absorbing layer formed on the cushioning layer. However, the thermal transfer image receiving sheet of Japanese Patent No. 2835111 has a problem of a ribbon wrinkles (wrinkles on ink ribbon), color omission, degradation of printing accuracy (due to deformation), and the like when the printing is performed directly on the absorbing layer on the cushioning layer.

A first object of the presently disclosed subject matter is to provide a printing sheet provided with a cushioning layer required for suppressing the wrinkles due to the elongation of an ink ribbon during thermal transfer and reducing color omission, and to provide a method for producing the same.

A second object of the presently disclosed subject matter is to provide a method for producing a printing sheet which is excellent in mass productivity and has high quality.

The printing sheet according to the presently disclosed subject matter comprises a transparent substrate, a first resin layer formed on one surface of the transparent substrate, a second resin layer formed on the first resin layer, an absorbing layer which is formed on the second resin layer and absorbs a dye in a coloring material of a thermal transfer sheet, a third resin layer formed on the other surface of the transparent substrate, and a lens layer formed on the third resin layer, wherein the first resin layer and the third resin layer have an adhesive function and a cushioning function.

In the printing sheet according to the presently disclosed subject matter, the second resin layer is preferably harder than the first resin layer.

In the printing sheet according to the presently disclosed subject matter, a laminate comprising the first resin layer and the second resin layer preferably has a deformation amount of 2.8 µm to 4.0 µm.

Here, the deformation amount means a displacement amount (µm) of a ball indenter having a diameter of 0.4 mm when a load of 200 mN is applied to the ball indenter over 10 seconds and then the load is reduced to zero over 10 seconds.

In the printing sheet according to the presently disclosed subject matter, the ratio of the total thickness of the third resin layer and the lens layer to the total thickness of the first resin layer and the second resin layer, that is, (thickness of third resin layer + thickness of lens layer)/(thickness of first resin layer + thickness of second resin layer), is preferably 2 to 4.

In the printing sheet according to the presently disclosed subject matter, the first resin layer and the third resin layer preferably include one material selected from a group consisting of a polyester resin, a modified polyolefin resin, and a polypropylene resin.

In the printing sheet according to the presently disclosed subject matter, the second resin layer and the lens layer preferably include one material selected from a group consisting of a polyester resin, a polymethyl methacrylate resin, a polycarbonate resin, a polystyrene resin, and a polyethylene resin.

In the printing sheet according to the presently disclosed subject matter, the transparent substrate preferably includes one material selected from a group consisting of a polyester resin, a polycarbonate resin, and a polysulfone resin.

The method for producing a printing sheet according to the presently disclosed subject matter comprises: melt-coextruding a first resin layer having an adhesive function and a cushioning function and a second resin layer on one surface of a continuously-running transparent substrate; nipping the transparent substrate and the second resin layer with a first cooling roller having a smooth surface which is arranged on a side of the second resin layer and a first nip roller arranged on a side of the transparent substrate; cooling and solidifying the second resin layer with the first cooling roller; releasing the transparent substrate on which the second resin layer is laminated through the first resin layer from the first cooling roller; melt-coextruding a third resin layer having an adhesive function and a cushioning function and a resin layer for forming a lens layer on the other surface of the continuously-running transparent substrate; nipping the second resin layer and the resin layer for forming a lens layer with a second cooling roller having a pattern for forming a lens which is arranged on a side of the resin layer for forming a lens layer and a second nip roller arranged on a side of the second resin layer to form a lens in the resin layer for forming a lens layer; cooling the resin layer for forming a lens layer with the second cooling roller to form a lens layer; and releasing the transparent substrate on which the lens layer is laminated through the third resin layer from the second cooling roller.

The method for producing a printing sheet according to the presently disclosed subject matter preferably further comprises forming an absorbing layer which absorbs a dye in a coloring material of a thermal transfer sheet on the second resin layer.

The presently disclosed subject matter can provide a printing sheet with a cushioning layer required for suppressing the wrinkles due to the elongation of an ink ribbon during thermal transfer and reducing color omission. Further, the presently disclosed subject matter can provide a printing sheet which is excellent in mass productivity and has high quality.

### BRIEF DESCRIPTION OF THE DRAWINGS

Fig. 1 illustrates a layered structure of a printing sheet;
Fig. 2 is a schematic diagram illustrating a production line according to a first embodiment;
Fig. 3 is a schematic diagram illustrating a production line according to another aspect of the first embodiment;

### DETAILED DESCRIPTION OF THE PREFERRED EMBODIMENTS

Hereinafter, preferred embodiments of the presently disclosed subject matter will be described with reference to accompanying drawings. Although the presently disclosed subject matter will be described by the following preferred embodiments, these embodiments do not depart from the scope of the presently disclosed subject matter and can be modified with many procedures, and other embodiments other than these embodiments can also be used. Therefore, all the modifications within the scope of the presently disclosed subject matter are included in the claims. Further, any numerical value range represented by using "to" in this specification means a range including the numerical values described before and after "to".

### <printing sheet>

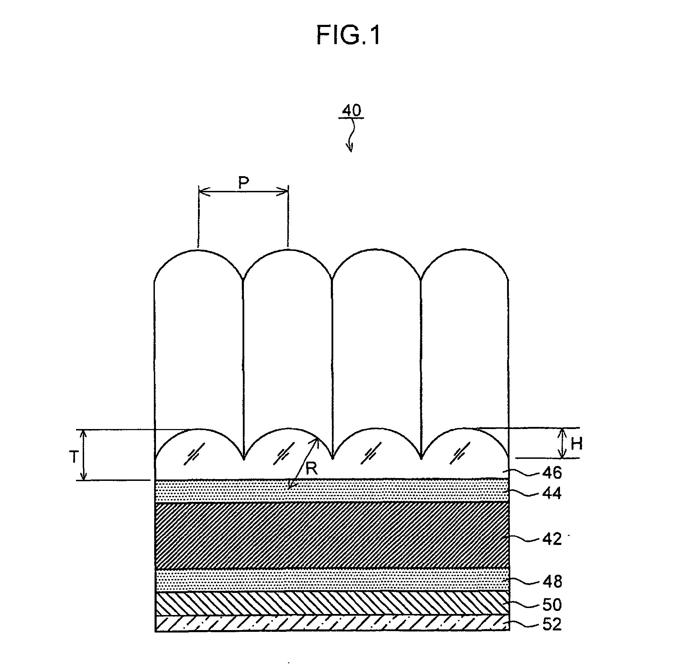

An example of a layered structure of a printing sheet is shown. A printing sheet 40 shown in Fig. 1 has a transparent substrate 42, a lens layer 46 adhered to the surface side of the transparent substrate 42 with a third resin layer 44, a second resin layer 50 adhered to the back side of the transparent substrate 42 with a first resin layer 48, and an absorbing layer 52 formed on the second resin layer 50.

### <Transparent substrate>

The transparent substrate 42 preferably has a sheet surface as smooth as possible. Further, the transparent substrate is required to be resistant to the heat of a molten resin which is melt extruded, and can include a resin having a relatively high heat-resistance such as a polycarbonate resin, a polysulfone resin, and a biaxially oriented polyethylene terephthalate resin. In particular, the biaxially oriented polyethylene terephthalate resin is preferred in terms of good smoothness.

The transparent substrate 42 preferably has a thickness of 100 µm to 300 µm, and more preferably has a thickness of 160 µm to 210 µm.

### <First resin layer>

The first resin layer 48 is formed on one surface of the transparent substrate 42. The first resin layer 48 includes a modified polyolefin resin, a polyester thermoplastic elastomer, and the like. The first resin layer 48 has a function to adhere the transparent substrate 42 to the second resin layer 50. The first resin layer 48 also has a cushioning function. Here, the cushioning function means a function to prevent partial contact of a printing head due to the unevenness of the substrate sheet or the absorbing layer 52 to allow the printing head to be in intimate contact with the absorbing layer 52.

The first resin layer 48 preferably has a thickness of 10 µm to 66 µm, and more preferably has a thickness of 5 µm to 10 µm. Further, the first resin layer 48 is preferably softer than the second resin layer 50.

### <Second resin layer>

The second resin layer 50 is adhered to the transparent substrate 42 through the first resin layer 48. At least one of the resins which constitute the second resin layer 50 is preferably the same resin as at least one of the resins which constitute the lens layer 46. Note that when the resins which constitute the second resin layer 50 and the resins which constitute the lens layer 46 include a plurality of resins, it is preferred that all of them are the same resins. Examples of the resins which constitute the second resin layer 50 include a polymethyl methacrylate resin (PMMA), a polycarbonate resin, a polystyrene resin, a methacrylate-styrene copolymer resin (MS resin), an acrylonitrile-styrene copolymer resin (AS resin), a polypropylene resin, a polyethylene resin, a polyethylene terephtalate resin, a glycol-modified polyethylene terephthalate resin, a polyvinyl chloride resin (PVC), a thermoplastic elastomer, copolymers of these resins, and a cycloolefin polymer. When ease of melt extruding is taken into consideration, it is preferred to use a resin having a low melt viscosity such as a polymethyl methacrylate resin (PMMA), a polycarbonate resin, a polystyrene resin, a methacrylate-styrene copolymer resin (MS resin), a polyethylene resin, a polyethylene terephthalate resin, and a glycol-modified polyethylene terephthalate resin; and when ease of transfer, cracking resistance of a sheet, and durability of a pattern are taken into consideration, it is more preferred to use a glycol-modified polyethylene terephthalate resin. When a resin material which constitutes the second resin layer 50 has an adhesive strength to the transparent substrate 42, it is not necessary to provide the first resin layer 48. In this case, the second resin layer 50 serves as the function of the first resin layer 48.

The second resin layer 50 preferably has a thickness of 15 µm to 50 µm, and more preferably has a thickness of 20 µm to 30 µm. The first resin layer 48 has a thickness of about 1/5 to 1/3 of the thickness of the second resin layer 50, and more preferably has a thickness of about 1/4 of the thickness of the second resin layer 50. The second resin layer 50 is preferably harder than the first resin layer 48, because if the second resin layer 50 has the same hardness as that of the first resin layer 48 or less, the pressing to the absorbing layer 52 by a printing head becomes too large to cause wrinkles of a transfer film during printing to generate color omission failure.

Suitable selection of the thickness and a resin material of the second resin layer 50 allows the second resin layer 50 to suppress curling of the transparent substrate 42 in a production process to be described later. Particularly, when a relatively thick (for example, 100 µm or more) lens layer 46 is formed, the curl suppressing function of the second resin layer 50 is important.

### <Absorbing layer>

The absorbing layer 52 which absorbs a dye in a coloring material of a thermal transfer sheet is formed on the second resin layer 50.

As the absorbing layer 52, there can be selected a layer which is adapted to both systems, that is, a system of incorporating a dye transferred from a thermal transfer ink sheet for coloring and a system of incorporating an ink drop discharged from an inkjet head for coloring. The absorbing layer 52 by a thermal transfer method should be referred to the following. The ink-absorbing layer 52 by an inkjet method comprises a hydrophilic water-absorbing polymer or resin such as polyvinyl alcohol and a cation resin, a pigment, a binder, and the like.

The thermal transfer image-receiving sheet of the present embodiment has at least one absorbing layer 52. The absorbing layer 52 contains a resin which has a function to fix a dye moving from the thermal transfer sheet and maintain the formed image. The absorbing layer 52 contains at least a polymer latex.

### (Polymer latex)

In the present specification, the polymer latex refers to a dispersion of a water-insoluble hydrophobic polymer dispersed as fine particles in a water-soluble dispersion medium.

Examples of thermoplastic resins used for the polymer latex used for the absorbing layer 52 of the present embodiment include polycarbonate, polyester, polyacrylate, polyvinyl chloride, a vinyl chloride-based copolymer, polyurethane, a styrene-acrylonitrile copolymer, and polycaprolactone.

### (Water-soluble polymer)

In the present embodiment, the absorbing layer 52 may contain a water-soluble polymer, and gelatin, polyvinyl alcohol, polyvinyl pyrrolidone, and a polyvinylpyrrolidone copolymer are preferably used for the water-soluble polymer. Especially, gelatin is preferably used because the setting properties on coating are good. These water-soluble polymers are effective for controlling the hydrophilicity and hydrophobicity of the absorbing layer 52, and as long as they are not used in an excessively large amount, they demonstrate good dye transfer from the ink sheet, and good transfer density. The amount of the water-soluble polymer used is preferably 0.1 to 10% by mass, more preferably 0.5 to 5% by mass, based on the mass of the whole solids of the absorbing layer 52.

### (Polyether-modified silicone)

In the present embodiment, the absorbing layer 52 preferably contains silicone, and preferably contains a palyether-modified silicone. As the polyether-modified silicone, the absorbing layer 52 particularly preferably contains a polyether-modified silicone.

### (Surfactant)

In the present embodiment, the absorbing layer 52 preferably contains a surfactant. As a surfactant, an anionic surfactant and a nonionic surfactant are preferred, and an anionic surfactant is more preferred.

### (Other additives)

The absorbing layer 52 of the present embodiment can optionally contain additives. Such additives include an ultraviolet absorber, an antiseptic, a film-forming auxiliary, a hardener, a matting agent (including a lubricant), an antioxidant, and other additives.

### [Method for preparing absorbing layer]

Hereinafter, a method for preparing the absorbing layer 52 of the present embodiment will be described. The absorbing layer 52 preferably involves an aqueous coating. However, as used herein "aqueous" refers to that the solvent (dispersion medium) of the coating liquid contains water in an amount of 60% by mass or more. As the components of the coating liquid other than water, there can be used water-miscible organic solvents such as methyl alcohol, ethyl alcohol, isopropyl alcohol, methyl cellosolve, ethyl cellosolve, dimethylformamide, ethyl acetate, diacetone alcohol, furfuryl alcohol, benzyl alcohol, diethylene glycol monoethyl ether, and oxyethylphenyl ether. As a method for preparing the absorbing layer 52, there is used slide coating, bar coating, or slot coating.

In a drying zone, the drying progresses through a constant-rate drying period when the drying rate is constant and material temperature is almost equal to wet-bulb temperature, and a decreasing-rate drying period when the drying rate becomes slow and material temperature rises. In the constant-rate drying period, all the heat given from the outside is used for evaporation of water. In the decreasing-rate drying period, water diffusion inside the material becomes rate-limiting; the drying rate is reduced by the regression of the surface of evaporation and the like; and the given heat comes to be used also for an increase in material temperature.

The dried coated article (dried article after the coating) is controlled to a certain moisture content and then is wound up. However, since the progress of film-forming is influenced by the moisture content and temperature in the storage process of the wound and coated article, it is necessary to suitably set humidification process conditions for controlling the moisture content in winding.

Fig. 1 illustrates a printing sheet 40 in which an absorbing layer 52 is formed on a second resin layer 50 as an example. However, without being limited to this, it is not necessary to form the absorbing layer 52 on the second resin layer 50. In this case, the absorbing layer 52 is formed on the second resin layer 50 by a printing apparatus, and then an image is formed on the absorbing layer 52 by the same or a different printing apparatus.

### <Third resin layer>

A third resin layer 44 is formed on the other surface of the transparent substrate 42. The third resin layer 44 includes a modified polyolefin resin, a polyester thermoplastic elastomer, and the like. The third resin layer 44 has a function of adhering the transparent substrate 42 to the lens layer 46. The third resin layer 44 also has a cushioning function similar to the first resin layer 48.

### <Lens layer>

A lens layer 46 is adhered to the transparent substrate 42 through the third resin layer 44. Examples of the resins which constitute the lens layer 46 include a polymethyl methacrylate resin (PMMA), a polycarbonate resin, a polystyrene resin, a methacrylate-styrene copolymer resin (MS resin), an acrylonitrile-styrene copolymer resin (AS resin), a polypropylene resin, a polyethylene resin, a polyethylene terephthalate resin, a glycol-modified polyethylene terephthalate resin, a polyvinyl chloride resin (PVC), a thermoplastic elastomer, copolymers of these resins, and a cycloolefin polymer. When ease of melt extruding is taken into consideration, it is preferred to use a resin having a low melt viscosity such as a polymethyl methacrylate resin (PMMA), a polycarbonate resin, a polystyrene resin, a methacrylate-styrene copolymer resin (MS resin), a polyethylene resin, a polyethylene terephthalate resin, and a glycol -modified polyethylene terephthalate resin; and when ease of transfer, cracking resistance of a sheet, and durability of a pattern are taken into consideration, it is more preferred to use a glycol-modified polyethylene terephthalate resin. The lens layer 46 may include a plurality of resins. When a resin material which constitutes the lens layer 46 has an adhesive strength to the transparent substrate 42, it is not necessary to provide the third resin layer 44 for the lens layer 46. In this case, the lens layer 46 serves as the third resin layer 44.

The lens layer 46 has a thickness (T) of 50 µm to 200 µm, and the surface thereof has a lenticular lens shape. The lenticular lens is formed in a shape having, for example, a lens radius (R) of 100 µm to 200 µm, a lens height (H) of 50 µm to 100 µm, and a distance between lenses (P) of 100 µm to 318 µm. However, the shape is not limited to these numerical values. The lenticular lens shape means a planar lens array in which semicylindrical lenses long in the longitudinal direction are laterally arranged, that is, a shape in which cylindrical lenses are two-dimensionally arranged.

With regard to the thickness of the third resin layer 44, the third resin layer 44 has a thickness of 10 µm to 66 µm in the convex part where the lens layer 46 has a thickness of 50 µm to 200 µm, and the third resin layer 44 has a thickness of 4 µm to 33 µm in the trough where the lens layer 46 has a thickness of 20 µm to 100 µm.

Next, a method for producing a printing sheet will be described.

### <Production method according to first embodiment>

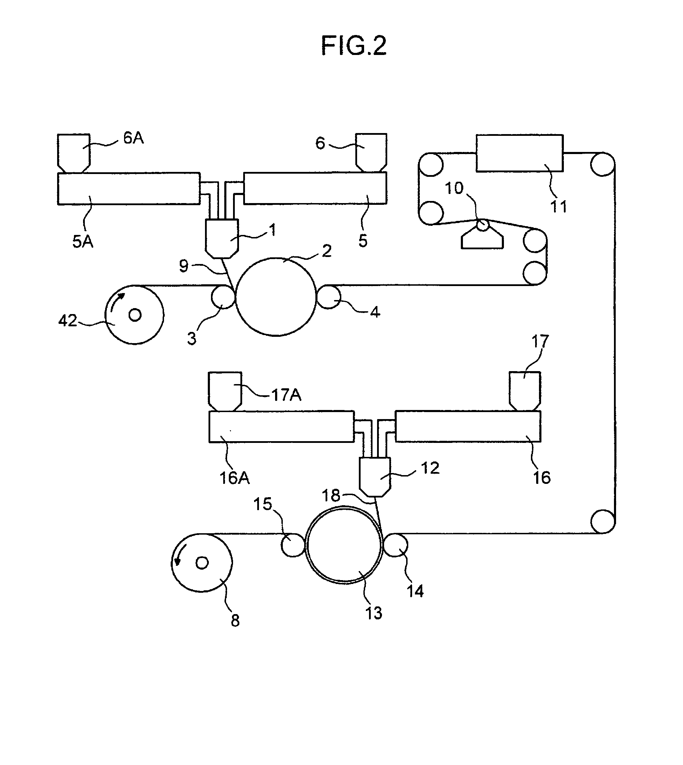

Fig. 2 is a schematic diagram illustrating a production line according to a first embodiment. First, raw materials for forming resin layers are measured and mixed. Specifically, a raw resin sent to a vacuum dryer from a raw material silo (or a raw material tank) is dried to a predetermined water content.

A dried raw resin is fed into an extruder 5A through a hopper 6A. It is melted while being kneaded by the extruder 5A. The extruder 5A may be any of a single-screw extruder and a multi-screw extruder and may be the one including a vent function for generating a vacuum in the extruder 5A. The raw resin melted in the extruder 5A is sent to a sheet die 1 through a feed pipe. A material for forming a first resin layer 48 is fed to the hopper 6A as a raw resin. The material for forming the first resin layer 48 has an adhesive function and a cushioning function.

A dried raw resin is fed into an extruder 5 through a hopper 6. It is melted while being kneaded by the extruder 5. The extruder 5 may be any of a single-screw extruder and a multi-screw extruder and may be the one including a vent function for generating a vacuum in the extruder 5. The raw resin melted in the extruder 5 is sent to a sheet die 1 through a feed pipe. The material for forming a second resin layer 50 is fed to the hopper 6 as a raw resin.

The sheet die 1 has a feed block which can join a plurality of resin materials to form a multilayer. The resin for forming a first resin layer 48 and the resin for forming a second resin layer 50 are joined by the feed block, and a sheet-shaped two-layer transparent thermoplastic resin 9 is melt-coextruded from the sheet die 1. Thereby, the first resin layer 48 is arranged between a transparent substrate 42 and the second resin layer 50. Since the first resin layer 48 has an adhesive function, the second resin layer 50 and the transparent substrate 42 are adhered with the first resin layer 48.

The two-layer transparent thermoplastic resin 9 extruded in a sheet shape from the sheet die 1 is fed between a mirror surface roller 2 and a nip roller 3. The transparent substrate 42 is delivered from a delivery machine (not shown). The transparent substrate 42 is fed between the mirror surface roller 2 and the nip roller 3, running along the nip roller 3. The transparent thermoplastic resin 9 is fed between the transparent substrate 42 and the mirror surface roller 2.

The transparent thermoplastic resin 9 and the transparent substrate 42 are nipped with the mirror surface roller 2 and the nip roller 3, and the transparent substrate 42 is released from the nip roller 3. The resin for forming a second resin layer 50 of the transparent thermoplastic resin 9 is cooled and solidified while being wound around the mirror surface roller 2 to form a second resin layer 50. Next, the transparent substrate 42 on which the second resin layer 50 is laminated through the first resin layer 48 is released from the mirror surface roller 2 with a release roller 4.

The mirror surface roller 2 has a surface having an average roughness (Ra) of 0.05 µm to 0.25 µm. Materials that can be employed for the mirror surface roller include: various steel members, stainless steel, copper, zinc, brass; those furnished with plating such as hard chrome plating (HCr plating), Cu plating, and Ni plating using any of these metallic materials as a core metal; ceramics; and various composite materials.

The nip roller 3 placed opposite to the mirror surface roller 2 is a roller for nipping the transparent substrate 42 and the transparent thermoplastic resin 9 in conjunction with the mirror surface roller 2.

Materials for the nip roller 3 include various steel members, stainless steel, copper, zinc, brass, those provided with rubber lining on the surface thereof using any of these metallic materials as a core metal. The nip roller 3 is provided with a pressurizing device which is not shown and can nip the transparent substrate 42 and the transparent thermoplastic resin 9 between the nip roller 3 and the mirror surface rollers 2 by a predetermined pressure. With respect to the pressurizing device, there can be employed various known devices having a structure of applying pressure in the normal direction at the point of contact of the nip roller 3 and the mirror surface roller 2, such as a motor drive device, an air cylinder, and a hydraulic cylinder.

The nip roller 3 can also employ a structure that minimizes the deflection due to the reaction force of the nip force (nip pressure). Such a structure includes a structure in which a backup roller which is not shown is provided on the back side of the nip roller 3 (opposite side of the mirror surface roller 2), a structure in which a crown-shaped (convex) roller is employed, a roller structure provided with a strength distribution in which the rigidity in the central part in the axial direction of the roller is larger than the other parts, and a structure obtained by combining any of these structures.

The release roller 4, which is placed opposite to the mirror surface roller 2, is a roller for releasing the transparent substrate 42 on which the resin layer is laminated from the mirror surface roller 2 by winding the transparent substrate 42. Materials for the release roller 4 that can be employed include various steel members, stainless steel, copper, zinc, brass, and those provided with rubber lining on the surface thereof using any of these metallic materials as a core metal.

The temperature of the mirror surface roller 2 is preferably set so that the temperature of the resin for forming a second resin layer 50 in the nip part will be the glass transition temperature of the resin or higher. In addition, the discharge temperature of the molten resin discharged from the sheet die 1 is controlled. The temperature of the resin for forming a second resin layer 50 in the nip part is set to the glass transition temperature of the resin or higher in order to obtain uniform thickness of the resin for forming a second resin layer 50 fed to the transparent substrate 42. On the other hand, if the adhesion between the mirror surface roller 2 and the resin for forming a second resin layer 50 is too high in releasing the transparent substrate 42 from the mirror surface roller 2 with the release roller 4, the transparent substrate 42 will be irregularly released to be deformed to have projections. The temperature of the mirror surface roller 2 is preferably set as low as possible as long as the transfer is possible. When a glycol-modified polyethylene terephthalate resin is employed as a material of the resin, the surface temperature of the mirror surface roller 2 may be 30 to 90°C, preferably 40 to 70°C. Note that, in order to control the temperature of the mirror surface roller 2, a known device can be employed, such as a device in which the inside of the mirror surface roller 2 is filled with a heating medium (warm water or oil) which is to be circulated therein.

Further, the discharge temperature is preferably set as low as possible as long as the transfer is possible, otherwise a problem such as a deterioration of surface shape may be caused by the thermal cracking (thermal decomposition) of the transparent thermoplastic resin 9. When a glycol-modified polyethylene terephthalate resin is employed as a material of the resin for forming a second resin layer 50, the discharge temperature of the resin from the sheet die I may be 240 to 290°C, preferably 250 to 280°C.

Next, the transparent substrate 42 on which the second resin layer 50 is laminated through the first resin layer 48 is conveyed to a coater 10. A dispersion for forming an absorbing layer 52 is applied to the second resin layer 50 with a coater 10 in a thickness of 2 µm to 4 µm. Known coaters such as a bar coater and a die coater can be used as the coater 10.

The transparent substrate 42 to which the dispersion is applied is conveyed to a drying zone 11. The inside of the drying zone 11 is set to 40°C to 120°C. The solvent contained in the dispersion is evaporated to form an absorbing layer 52 on the second resin layer 50. Drying with a heater, drying with a hot wind, and drying with an infrared heater can be used as a drying method.

The transparent substrate 42 on which the absorbing layer 52 is formed is fed between an embossing roller 13 and a nip roller 14 in a manner that the absorbing layer 52 side moves along the nip roller 14 (in other words, the absorbing layer 52 faces the surface of the nip roller 13). A dried raw resin is fed into an extruder 16A through a hopper 17A. It is melted while being kneaded by the extruder 16A. The extruder 16A may be any of a single-screw extruder and a multi-screw extruder and may be the one including a vent function for generating a vacuum in the extruder 16A. The raw resin melted in the extruder 16A is sent to a sheet die 12 through a feed pipe. A material for forming a lens layer 46 is fed to the hopper 17A as a raw resin.

A dried raw resin is fed into an extruder 16 through a hopper 17. It is melted while being kneaded by the extruder 16. The extruder 16 may be any of a single-screw extruder and a multi-screw extruder and may be the one including a vent function for generating a vacuum in the extruder 16. The raw resin melted in the extruder 16 is sent to the sheet die 12 through a feed pipe. A material for forming the third resin layer 44 is fed to the hopper 17 as a raw resin.

The sheet die 12 has a feed block which can join a plurality of resin materials to form a multilayer. The resin for forming a third resin layer 44 and the resin for forming a lens layer 46 are joined by the feed block, and a sheet-shaped two-layer transparent thermoplastic resin 18 is melt-coextruded from the sheet die 12. The third resin layer 44 is arranged between the transparent substrate 42 and the lens layer 46. Since the third resin layer 44 has an adhesive function, the lens layer 46 and the transparent substrate 42 are adhered with the third resin layer 44.

The two-layer transparent thermoplastic resin 18 extruded in a sheet shape from the sheet die 12 is fed between the transparent substrate 42 and the embossing roller 13. A reversed shape for molding, for example, a lenticular lens shape is formed on the surface of the embossing roller 13. The transparent thermoplastic resin 18 and the transparent substrate 42 are nipped with the embossing roller 13 and the nip roller l4, and the reversed shape formed on the embossing roller 13 is transferred to the resin for forming a lens layer 46. The transparent substrate 42 is released from the nip roller 14. The resin for forming a lens layer 46 on which the lenticular lens shape is transferred is cooled and solidified while being wound around the embossing roller 13 to form a lens layer 46. The transparent substrate 42 on which the lens layer 46 is laminated through the third resin is released from the embossing roller 13 with a release roller 15.

When the lens layer 46 is formed, the resin for forming a lens layer 46 undergoes thermal shrinkage by the cooling and solidifying. According to the present embodiment, the second resin layer 50 is formed on the surface of the transparent substrate 42 opposite to the surface on which the lens layer 46 is formed. This second resin layer 50 can suppress the warpage of the transparent substrate 42 due to the thermal shrinkage of the transparent thermoplastic resin 18. Particularly, when the lens layer 46 has a thickness of 100 µm or more and thus may exhibit high thermal shrinkage, it is important to suppress the curling of the transparent substrate 42 by the second resin layer 50.

Similar to the mirror surface roller 2, materials that can be employed for the embossing roller 13 include various steel members, stainless steel, copper, zinc, brass, those furnished with plating such as hard chrome plating (HCr plating), Cu plating, and Ni plating using any of these metallic materials as a core metal, ceramics, and various composite materials. Further, the nip roller 14, which is placed opposite to the embossing roller 13, is a roller for nipping the second resin layer 50, the transparent substrate 42, and the transparent thermoplastic resin 18 in conjunction with the embossing roller 13. Materials for the nip roller 14 include various steel members, stainless steel, copper, zinc, brass, and those provided with rubber lining on the surface thereof using any of these metallic materials as a core mental.

Similar to the nip roller 3, the nip roller 14 can be provided with a pressurizing device. Further, the nip roller 14 can also employ a structure that minimizes the deflection due to the reaction force of the nip force (nip pressure).

The temperature of the embossing roller 13 is set so that the temperature of the resin for forming a lens layer 46 in the nip part may be the glass transition temperature of the resin or higher. This is for preventing the cooling and solidification of the resin for forming a lens layer 46 before the pattern transfer to the resin is completed. On the other hand, if the adhesion between the embossing roller 13 and the lens layer 46 is too high in releasing the transparent substrate 42 from the embossing roller 13 with the release roller 15, the transparent substrate 42 will be irregularly released to be deformed to have projections. The temperature of the embossing roller 13 is preferably set as low as possible as long as the transfer is possible.

When a glycol-modified polyethylene terephthalate resin is employed as a material of the resin, the surface temperature of the embossing roller 13 may be 30 to 90 °C, preferably 40 to 70 °C. Note that, in order to control the temperature of the embossing roller, a known device can be employed, such as a device in which the inside of the embossing roller 13 is filled with a heating medium (warm water or oil) which is to be circulated therein. The discharge temperature of the molten resin for forming a lens layer 46 from the sheet die 12 is controlled and set so that the temperature of the resin for forming a lens layer 46 in the nip part will be the glass transition temperature of the resin or higher. This is for preventing the cooling and solidification of the nipped resin for forming a lens layer 46 before the pattern transfer to the resin is completed.

Further, the discharge temperature is preferably set as low as possible as long as the transfer is possible, otherwise a problem such as a deterioration of surface shape may be generated by the thermal cracking of the transparent thermoplastic resin 18. When the glycol-modified polyethylene terephthalate resin is employed as a material of the resin, the discharge temperature of the resin from the sheet die 12 may be 240 to 290°C, preferably 250 to 280°C.

The transparent substrate 42 released from the embossing roller 13 with the release roller 15 is wound up into a film roll 8. The film roll 8 which has the lens layer 46 on one surface thereof and the resin layer on the other surface thereof is unwound and conveyed to a punching step (not shown). In the punching step, the film roll 8 is punched into a predetermined size (for example, 12.7 cm x 17.8 cm).

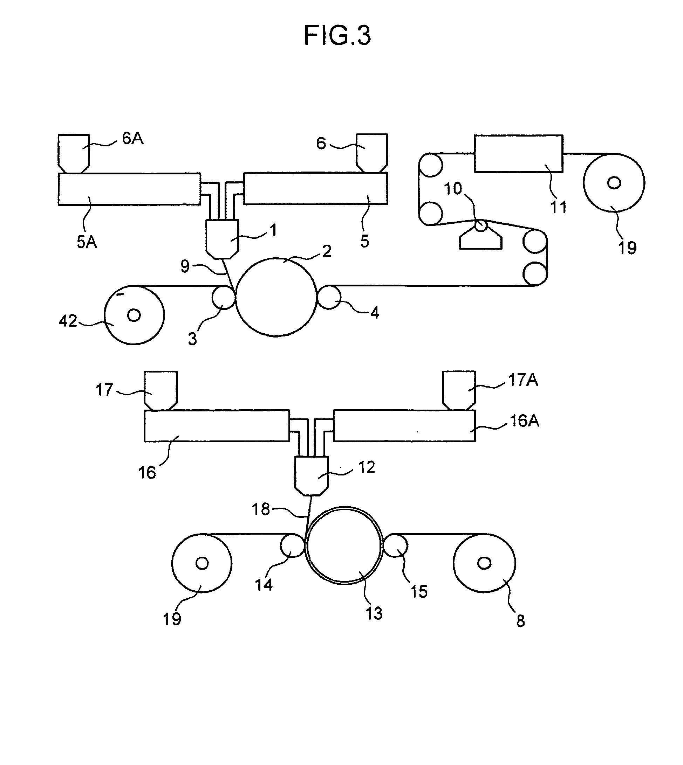

Fig. 3 is a schematic diagram illustrating a production line according to another aspect of the first embodiment. The same numerals may be given to the same structures as in Fig. 2, and the description thereof may be omitted. According to the present embodiment shown in Fig. 3, a transparent substrate 42 is once wound up into a film roll 19 after an absorbing layer 52 is formed on a second resin layer 50. Subsequently, the film roll 19 is unwound, and the two-layer transparent thermoplastic resin 18 is fed between a transparent substrate 42 and an embossing roller 13.

### <Examples>

Hereinafter, the presently disclosed subject matter will be more specifically described with reference to Examples. Materials, the amounts used, percentages, the contents of treatment, procedures, and the like which are shown in the following Examples can be suitably modified as long as they do not depart from the spirit of the presently disclosed subject matter. Therefore, the scope of the presently disclosed subject matter is not limited to specific examples shown below. Note that part(s) or % for the composition in Examples is on the mass basis unless otherwise specified.

### (Preparation of sample 101)

A sample 101 was prepared by the following steps.

### (Formation of first resin layer 48 and second resin layer 50)

A polyethylene terephthalate (PET) film (manufactured by Fujifilm Co., Ltd.) having a thickness of 188 µm was used as a transparent substrate. The PET film (188 µm in thickness) running at 10 m/min was inserted between a mirror surface roll (Φ 350 mm, a surface temperature of 15°C) and a nip roll. A glycol-modified polyethylene terephthalate resin PETG (manufactured by SK Chemicals Co., Ltd.) and an adhesive resin (Admer, manufactured by Mitsui Chemicals, Inc.) were coextruded from a T-die (with a discharge width of 350 mm) set at a temperature of 280°C. the coextruded resins having an actually measured temperature of 260 to 280°C. The coextruded resins were fed between the PET film and the mirror surface roll to form a first resin layer 48 and a second resin layer 50. The adhesive resin is a resin for forming a first resin layer 48, and the glycol-modified polyethylene terephthalate resin PETG is a resin for forming a second resin layer 50. A resin sheet in which the second resin layer 50 is formed on the PET film was wound up in a winding step.

Thereto was applied an absorbing layer 52-coating liquid to provide an absorbing layer 52. The absorbing layer 52 was prepared with the following formulation.

### (Formation of absorbing layer 52)

### (1) Synthesis of polyether-modified silicone

A known method described in "Silicone Handbook" (Nikkan Kogyo Shimbun, Ltd., 1990, p. 163) by Kunio Itoh or the like can be used for the synthesis of a polyether-modified silicone.

Specifically, in a glass flask equipped with an agitating device and a thermometer, 20 parts by mass of a dimethylsiloxane-methylhydrogen siloxane copolymer was mixed with 40 parts by mass of a one terminal allyl-etherified polyoxyalkylene, and thereto was added 20 parts by mass of isopropyl alcohol as a solvent. Thereto was further added chloroplatinic acid, and the resulting mixture was stirred at 86°C for 2 hours. Then, it was verified that a peak showing Si-H in the infrared absorption spectrum had disappeared, and the mixture was further stirred for 30 minutes. The reaction mixture was subjected to vacuum concentration to obtain the polyether-modified silicone.

### (2) Preparation of absorbing layer 52-coating liquid

20.0 parts by mass of a vinyl chloride/acrylic copolymer latex (Vinyblan 900, trade name, manufactured by Nissin Chemical Industry, Co. Ltd., a solid content of 40%);
20.0 parts by mass of a vinyl chloride/acrylic copolymer latex (Vinyblan 690, trade name, manufactured by Nissin Chemical Industry, Co. Ltd., a solid content of 55%);
2.0 parts by mass of gelatin (10% aqueous solution);
0.5 part by mass of polyvinyl pyrrolidone (K-90, trade name, manufactured by ISP Co., Ltd.);
1.5 parts by mass of the above polyether-modified silicone (100%);
0.5 part by mass of an anionic surfactant A1-1; and
50.0 parts by mass of water

### (3) Coating

The absorbing layer 52-coating liquid was applied to the resin layer with a bar coater so that the coating amount after drying will be 2.5 g/m², thus forming an absorbing layer 52.

### (Formation of lens layer 46 and third resin layer 44)

Then, the resin sheet was unwound from a delivery step at 10 to 20 m/min and inserted between an embossing roll (φ 350 mm, 40°C) provided with a lenticular lens shape (having a radius of 150 µm, a lens height of 70 µm, and a pitch of 254 µm) and a nip roll. A glycol-modified polyethylene terephtalate resin PETG (manufactured by SK Chemicals Co., Ltd.) and an adhesive resin (Admer, manufactured by Mitsui Chemicals, Inc.) were coextruded from a T-die (with a discharge with of 330 mm) set at a temperature of 280°C, the coextruded resins having an actually measured temperature of 260 to 280°C. The coextruded resins were fed between the resin sheet and the embossing roll to laminate the lens layer 46 and the third resin layer 44. The resulting sheet was nipped and cooled and solidified with the embossing roll and the nip roll to obtain a printing sheet having a lenticular lens (with a thickness of 340 µm). The glycol-modified polyethylene terephthalate resin PETG is a lens layer 46-forming resin, and the adhesive resin is a resin for forming the third resin layer 44.

### (Preparation of samples 102 and 103)

Samples 102 and 103 were produced by changing the thicknesses of the glycol-modified polyethylene terephthalate (PETG) resin and the adhesive resin (Admer, manufactured by Mitsui Chemicals, Inc.) in the sample 101.

### (Image forming method)

A Fujifilm thermal photo printer ASK-2000 (trade name) manufactured by Fujifilm Co., Ltd. was modified with reference to Japanese Patent Nos. 3789033 and 3609065 for use as a printer for forming an image so that the thermal transfer sheet and the thermal transfer image-receiving sheet can be loaded. The printer was outputted by setting so that the gradation of gray may be obtained in the whole region from the minimum density to the maximum density.

### (Measuring method of ball indenter hardness)

In measuring the ball indenter hardness, a sample was applied with a ball indenter having a diameter of 0.4 mm, to which was applied a load of 200 mN over 10 seconds, and then the load was reduced to zero over 10 seconds. The maximum displacement amount (µm) of each sample at that time was measured. The smaller the displacement amount, the higher the hardness.

### (Evaluation of transfer failure)

For each sample, 20 sheets of an image in which the area of a black image is equal to that of a white image in the Dmax portion were continuously printed in the 2L size, and the number of wrinkle-like failure was counted. Here, the Dmax portion means a portion where a density is the maximum.

Further, the degree of color shift of the printed matter was visually evaluated as follows:
Score 5: No color shift is generated in all the sheets;
Score 4: A color shift of the image is generated in less than three sheets;
Score 3: A color shift of the image is generated in three or more sheets and less than five sheets:
Score 2: A color shift of the image is generated in five or more sheets and less than 10 sheets; and
Score 1: A color shift of the image is generated in 10 or more sheets.
Table 1 shows the film thicknesses and obtained results of the samples 101 to 103.

**[Table 1]**

| | Surface side | | Back side | | | | Displacement amount of ball indention hardness (µm) | Evaluation | |
|---|---|---|---|---|---|---|---|---|---|
| | Lens layer | Third resin layer | Second resin layer | Thickness (µm) | First resin layer | Thickness (µm) | | Wrinkles (pieces/ 2L 20) | Color shift |
| 101 | PETG | Admer | PETG | 30 | Admer | 10 | 3.5 | 2 | 5 |
| 102 | PETG | Admer | PETG | 25 | Admer | 5 | 3.0 | 5 | 4 |
| 103 | PETG | Admer | PETG | 40 | None | - | 2.5 | 15 | 2 |

As compared with the thermal transfer image-receiving sheet 103 in Comparative Example, the thermal transfer image-receiving sheets of the presently disclosed subject matter of the samples 101 and 102 showed a remarkable effect in terms of little transfer failure and a low frequency of occurrence of an image with a low stereoscopic effect. That is, it can be understood that the thermal transfer image-receiving sheet of the presently disclosed subject matter shows a remarkable effect in terms of little transfer failure and a low frequency of occurrence of an image with a low stereoscopic effect because the laminate of the first resin layer 48 and the second resin layer 50 formed between the absorbing layer 52 and the transparent substrate has a deformation amount of ball indention hardness of 3.0 (µm) to 3.5 (µm).

## Claims

1. A printing sheet, comprising:
a transparent substrate (42);
a first resin layer (48) formed on one surface of the transparent substrate;
a second resin layer (50) formed on the first resin layer (48);
an absorbing layer (52) which is formed on the second resin layer (50) and absorbs a dye in a coloring material of a thermal transfer sheet;
a third resin layer (44) formed on the other surface of the transparent substrate (42);
and
a lens layer (46) formed on the third resin layer (44),
wherein the first resin layer (48) and the third resin layer (44) have an adhesive function and a cushioning function.

2. The printing sheet according to claim 1, wherein the second resin layer (50) is harder than the first resin layer (48).

3. The printing sheet according to claim 2, wherein a laminate comprising the first resin layer (48) and the second resin layer (50) has a deformation of 2.8 µm to 4.0 µm, wherein the deformation means the displacement (µm) of a ball indenter having a diameter of 0.4 mm when a load of 200 mN is applied to the ball indenter over 10 seconds and then the load is reduced to zero over 10 seconds.

4. The printing sheet according to any of claims 1 to 3, wherein a ratio of a total thickness of the third resin layer (44) and the lens layer (46) to a total thickness of the first resin layer (48) and the second resin layer (50) is 2 to 4.

5. The printing sheet according to any of claims 1 to 4, wherein the first resin layer (48) and the third resin layer (44) include one material selected from a group consisting of a polyester resin, a modified polyolefin resin, and a polypropylene resin.

6. The printing sheet according to any of claims 1 to 5, wherein the second resin layer (50) and the lens layer (46) include one material selected from a group consisting of a polyester resin, a polymethyl methacrylate resin, a polycarbonate resin, a polystyrene resin, and a polyethylene resin.

7. The printing sheet according to any of claims 1 to 6, wherein the transparent substrate (42) includes one material selected from a group consisting of a polyester resin, a polycarbonate resin, and a polysulfone resin.

8. A method for producing a printing sheet, comprising:
melt-coextruding a first resin layer (48) having an adhesive function and a cushioning function and a second resin layer (50) on one surface of a continuously-running transparent substrate (42);
nipping the transparent substrate (42) and the second resin layer (50) with a first cooling roller (2) having a smooth surface which is arranged on a side of the second resin layer (50) and a first nip roller (3) arranged on a side of the transparent substrate (42);
cooling and solidifying the second resin layer (50) with the first cooling roller (2);
releasing the transparent substrate (42) on which the second resin layer (50) is laminated through the first resin layer (48) from the first cooling roller (2);
melt-coextruding a third resin layer (44) having an adhesive function and a cushioning function and a resin layer for forming a lens layer (46) on the other surface of the continuously-running transparent substrate (42);
nipping the second resin layer (50) and the resin layer for forming a lens layer (46) with a second cooling roller (13) with a pattern for forming a lens which is arranged on a side of the resin layer for forming the lens layer (46) and a second nip roller (14) arranged on a side of the second resin layer (50) to form a lens on the resin layer for forming the lens layer (46);
cooling the resin layer for forming the lens layer (46) with the second cooling roller (13) to form the lens layer (46); and
releasing the transparent substrate (42) on which the lens layer (46) is laminated through the third resin layer (44) from the second cooling roller (13).

9. The method for producing a printing sheet according to claim 8, further comprising
forming an absorbing layer (52) which absorbs a dye in a coloring material of a thermal transfer sheet on the second resin layer (50).

## Patentansprüche

1. Druckblatt, umfassend:
ein transparentes Substrat (42);
eine erste Harzschicht (48), die auf einer Oberfläche des transparenten Substrats gebildet ist;
eine zweite Harzschicht (50), die auf der ersten Harzschicht (48) gebildet ist;
eine absorbierende Schicht (52), die auf der zweiten Harzschicht (50) gebildet ist und einen Farbstoff in einem Färbematerial eines Thermoübertragungsblatts absorbiert;
eine dritte Harzschicht (44), die auf der anderen Oberfläche des transparenten Substrats (42) gebildet ist; und
eine Linsenschicht (46), die auf der dritten Harzschicht (44) gebildet ist,
worin die erste Harzschicht (48) und die dritte Harzschicht (44) eine Adhäsivfunktion und eine Dämpfungsfunktion aufweisen.

2. Druckblatt gemäß Anspruch 1, worin die zweite Harzschicht (50) härter ist als die erste Harzschicht (48).

3. Druckblatt gemäß Anspruch 2, worin ein Laminat, das die erste Harzschicht (48) und die zweite Harzschicht (50) umfasst, eine Deformation von 2,8 bis 4,0 µm aufweist, worin die Deformation den Versatz (µm) eines Kugel-Eindruck-Körpers mit einem Durchmesser von 0,4 mm bezeichnet, wenn eine Belastung von 200 mN auf den Kugel-Eindruck-Körper über 10 Sekunden ausgeübt wird und dann die Belastung über 10 Sekunden auf null verringert wird.

4. Druckblatt gemäß irgendeinem der Ansprüche 1 bis 3, worin das Verhältnis der Gesamtdicke der dritten Harzschicht (44) und der Linsenschicht (46) zur Gesamtdicke der ersten Harzschicht (48) und der zweiten Harzschicht (50) 2 bis 4 beträgt.

5. Druckblatt gemäß irgendeinem der Ansprüche 1 bis 4, worin die erste Harzschicht (48) und die dritte Harzschicht (44) ein Material umfassen, ausgewählt aus der Gruppe bestehend aus einem Polyesterharz, einem modifizierten Polyolefinharz und einem Polypropylenharz.

6. Druckblatt gemäß irgendeinem der Ansprüche 1 bis 5, worin die zweite Harzschicht (50) und die Linsenschicht (46) ein Material umfassen, ausgewählt aus der Gruppe bestehend aus einem Polyesterharz, einem Polymethylmethacrylatharz, einem Polycarbonatharz, einem Polystyrolharz und einem Polyethylenharz.

7. Druckblatt gemäß irgendeinem der Ansprüche 1 bis 6, worin das transparente Substrat (42) ein Material umfasst, ausgewählt aus der Gruppe bestehend aus einem Polyesterharz, einem Polycarbonatharz und einem Polysulfonharz.

8. Verfahren zur Herstellung eines Druckblatts, umfassend:
Schmelz-Koextrudieren einer ersten Harzschicht (48) mit einer Adhäsivfunktion und einer Dämpfungsfunktion und einer zweiten Harzschicht (50) auf eine Oberfläche eines kontinuierlich sich bewegenden transparenten Substrats (42);
Glätten des transparenten Substrats (42) und der zweiten Harzschicht (50) mit einer ersten Kühlwalze (2) mit einer glatten Oberfläche, die auf der Seite der zweiten Harzschicht (50) angeordnet ist, und einer ersten Glättwalze (3), die auf einer Seite des transparenten Substrats (42) angeordnet ist;
Kühlen und Verfestigen der zweiten Harzschicht (50) mit der erste Kühlwalze (2);
Ablösen des transparenten Substrats (42), auf dem die zweite Harzschicht (50) durch die erste Harzschicht (48) laminiert ist, von der ersten Kühlwalze (2);
Schmelz-Koextrudieren einer dritten Harzschicht (44) mit einer Adhäsivfunktion und einer Dämpfungsfunktion und einer Harzschicht zum Bilden einer Linsenschicht (46) auf der anderen Oberfläche des kontinuierlich sich bewegenden transparenten Substrats (42);
Glätten der zweiten Harzschicht (50) und der Harzschicht zum Bilden einer Linsenschicht (46) mit einer zweiten Kühlwalze (13) mit einem Muster zum Bilden einer Linse, die auf der Seite der Harzschicht zum Bilden der Linsenschicht (46) angeordnet ist, und einer zweiten Glättwalze (14), die auf der Seite der zweiten Harzschicht (50) angeordnet ist, um eine Linse auf der Harzschicht zum Bilden der Linsenschicht (46) zu bilden;
Kühlen der Harzschicht zum Bilden der Linsenschicht (46) mit einer zweiten Kühlwalze (13), um die Linsenschicht (46) zu bilden; und
Ablösen des transparenten Substrats (42), auf dem die Linsenschicht (46) durch die dritte Harzschicht (44) laminiert ist, von der zweiten Kühlwalze (13).

9. Verfahren zur Herstellung eines Druckblatts gemäß Anspruch 8, ferner umfassend das Bilden einer absorbierenden Schicht (52), die einen Farbstoff in einem Färbematerial eines Thermotransferblattes absorbiert, auf der zweiten Harzschicht (50).

## Revendications

1. Feuille d'impression comprenant :
un substrat transparent (42) ;
une première couche de résine (48) formée sur une surface du substrat transparent ;
une deuxième couche de résine (50) formée sur la première couche de résine (48) ;
une couche absorbante (52) qui est formée sur la deuxième couche de résine (50) et absorbe un colorant dans un matériau colorant d'une feuille de transfert thermique ;
une troisième couche de résine (44) formée sur l'autre surface du substrat transparent (42) ; et
une couche de lentille (46) formée sur la troisième couche de résine (44),
dans laquelle la première couche de résine (48) et la troisième couche de résine (44) ont une fonction adhésive et une fonction d'amortissement.

2. Feuille d'impression selon la revendication 1, dans laquelle la deuxième couche de résine (50) est plus dure que la première couche de résine (48).

3. Feuille d'impression selon la revendication 2, dans laquelle un stratifié comprenant la première couche de résine (48) et la deuxième couche de résine (50) a une déformation de 2,8 µm à 4,0 µm, la déformation signifiant le déplacement (µm) d'un testeur de dureté à la bille ayant un diamètre de 0,4 mm quand une charge de 200 mN est appliquée au testeur de dureté à la bille sur 10 secondes et ensuite la charge est réduite à zéro sur 10 secondes.

4. Feuille d'impression selon l'une quelconque des revendications 1 à 3, dans laquelle le rapport de l'épaisseur totale de la troisième couche de résine (44) et de la couche de lentille (46) à l'épaisseur totale de la première couche de résine (48) et de la deuxième couche de résine (50) est de 2 à 4.

5. Feuille d'impression selon l'une quelconque des revendications 1 à 4, dans laquelle la première couche de résine (48) et la troisième couche de résine (44) comprennent un matériau choisi dans le groupe constitué par une résine de polyester, une résine de polyoléfine modifiée, et une résine de polypropylène.

6. Feuille d'impression selon l'une quelconque des revendications 1 à 5, dans laquelle la deuxième couche de résine (50) et la couche de lentille (46) comprennent un matériau choisi dans le groupe constitué par une résine de polyester, une résine de poly(méthacrylate de méthyle), une résine de polycarbonate, une résine de polystyrène, et une résine de polyéthylène.

7. Feuille d'impression selon l'une quelconque des revendications 1 à 6, dans laquelle le substrat transparent (42) comprend un matériau choisi dans le groupe constitué par une résine de polyester, une résine de polycarbonate, et une résine de polysulfone.

8. Procédé pour produire une feuille d'impression, comprenant :
la coextrusion à l'état fondu d'une première couche de résine (48) ayant une fonction adhésive et une fonction d'amortissement et d'une deuxième couche de résine (50) sur une surface d'un substrat transparent se déplaçant en continu (42) ;
le pinçage du substrat transparent (42) et de la deuxième couche de résine (50) avec un premier rouleau refroidisseur (2) ayant une surface lisse qui est agencée sur un côté de la deuxième couche de résine (50) et un premier rouleau pinceur (3) agencé sur un côté du substrat transparent (42) ;
le refroidissement et la solidification de la deuxième couche de résine (50) avec le premier rouleau refroidisseur (2) ;
la libération du substrat transparent (42) sur lequel la deuxième couche de résine (50) est stratifiée par l'intermédiaire de la première couche de résine (48) depuis le premier rouleau refroidisseur (2) ;
la coextrusion à l'état fondu d'une troisième couche de résine (44) ayant une fonction adhésive et une fonction d'amortissement et d'une couche de résine pour former une couche de lentille (46) sur l'autre surface du substrat transparent se déplaçant en continu (42) ;
le pinçage de la deuxième couche de résine (50) et de la couche de résine pour former une couche de lentille (46) avec un deuxième rouleau refroidisseur (13) avec un motif pour former une lentille qui est disposé sur un côté de la couche de résine pour former la couche de lentille (46) et un deuxième rouleau pinceur (14) agencé sur un côté de la deuxième couche de résine (50) pour former une lentille sur la couche de résine pour former la couche de lentille (46) ;
le refroidissement de la couche de résine pour former la couche de lentille (46) avec le deuxième rouleau refroidisseur (13) pour former la couche de lentille (46) ; et
la libération du substrat transparent (42) sur lequel la couche de lentille (46) est stratifiée par l'intermédiaire de la troisième couche de résine (44) depuis le deuxième rouleau refroidisseur (13).

9. Procédé pour produire une feuille d'impression selon la revendication 8, comprenant en outre la formation d'une couche absorbante (52) qui absorbe un colorant dans un matériau colorant d'une feuille de transfert thermique sur la deuxième couche de résine (50).
